Europäisches Patentamt

(19) **European Patent Office**

Office européen des brevets

(11) Publication number: **0 277 774**
**B1**

(12) **EUROPEAN PATENT SPECIFICATION**

(45) Date of publication of the patent specification: 04.04.90

(51) Int. Cl.⁴: **B62D 55/30**

(21) Application number: 88300748.6

(22) Date of filing: 28.01.88

(54) Track tensioning means for tracked vehicles.

(30) Priority: 05.02.87 GB 8702601

(43) Date of publication of application:
10.08.88 Bulletin 88/32

(45) Publication of the grant of the patent:
04.04.90 Bulletin 90/14

(84) Designated Contracting States:
AT BE CH DE ES FR GB IT LI NL SE

(56) References cited:
CH-A- 473 373
DE-A- 1 952 939
DE-A- 2 358 386
FR-A- 2 145 778
US-A- 3 972 569
US-A- 4 149 757

(73) Proprietor: VICKERS PLC, Vickers House Millbank
Tower Millbank, London SW1P 4RA(GB)

(72) Inventor: Brown, James William 8 Victoria Terrace, Old
Penshaw Houghton-le-Spring, Tyne & Wear
DH4 7EJ(GB)
Inventor: Armstrong, Robert, 11 Langston Lea, High
Shincliffe Co Durham DH1 2QF(GB)

(74) Representative: Gura, Henry Alan et al, MEWBURN
ELLIS & CO. 2/3 Cursitor Street, London EC4A 1BQ(GB)

## Description

This invention relates to tensioning means for the tracks of tracked vehicles.

Tracked vehicles, be they for military purposes such as tanks or for civil purposes such as construction site equipment, periodically require the tension in the tracks thereof to be adjusted, for example to compensate for track wear or to vary the ride height attitude dependent upon loading of the vehicle.

Conventional tracks of such vehicles include an idler wheel adjacent the front regions thereof, (although said idler wheels can be elsewhere within the. track) and adjustment of the track is commonly achieved by bodily movement of the idler wheel to a position taking up any slack and providing the required tension.

In the case of military vehicles such as battle tanks, adjustment of the locations of the idler wheels is commonly achieved by manual rotation of an adjustment nut using an associated spanner. Clearly this is a laborious task requiring the use of extraneous equipment and requiring the presence of personel outside the vehicle at the idler wheels.

In the case of civil construction equipment, it is standard practice for movement of the idler wheels to be effected by means of single-acting grease-filled rams reacting on the idler wheels, it being necessary to pump up these rams with grease guns until the required tension is reached. This can again be a tedious operation and suffers from the further disadvantage of being messy, particularly on retraction of the rams.

Although it has been proposed for example in West German Offenlegungsschrift 2 358 386, to provide a doubleacting hydraulic ram mounted externally of a vehicle and operable from within the personnel compartment to effect adjustment of the idler wheel, the major hydraulic components of the control circuit are located remote from the ram and are connected thereto by extensive lengths of hydraulic pipework.

Such pipework linking the hydraulic components with the ram is prone to damage, and, in the event of such damage, the hydraulic circuit is interrupted and the hydraulic ram becomes inoperative.

It would be desirable to be able to provide means for tensioning and detensioning the tracks of tracked vehicles less prone to the aforementioned problems associated with the prior art.

According to the present invention, there is provided track tensioning means for a tracked vehicle, the vehicle including a personnel compartment and a pair of tracks each incorporating an adjustable idler wheel the tensioning means comprising, for each track, an hydraulically-operated, double-acting ram interconnected with, and adapted to effect movement of, the associated idler wheel, the hydraulic rams being mounted on associated mounting members, which members are themselves mounted in, to be pivotal relative to, the body of the vehicle whereby the hydraulic rams are movable bodily with said mounting members about axes extending substantially transversely of the vehicle, the tensioning means further comprising a hydraulic control circuit for said rams actuation of which is effected from within the personnel compartment of the vehicle characterised in that the mounting members each include a part within the vehicle and the hydraulic circuit includes, for each double-acting ram, a one-way check valve mounted on that part of the associated mounting member located within the vehicle.

It will be appreciated that, with such an arrangement, each hydraulic ram and its check valve, both being mounted on an associated mounting member, effectively comprise a single assembly thus obviating the necessity for interconnecting pipework, while the presence of a check valve immediately adjacent each ram provides an inbuilt safety feature to the hydraulic system and protects the rams from hydraulic collapse in the event of hydraulic failure in the system.

The hydraulic control circuit includes a control pump which may be either manually operated or electrically operated, said pump conveniently incorporating a low pressure relief valve adjustable to determine the hydraulic pressure in the rams and therefore the tension applied to the tracks.

The control circuit preferably further includes, for each hydraulic ram, a pressure relief valve adapted to relieve pressure within the associated ram when said pressure exceeds a predetermined maximum value. Conveniently the pressure relief valves are mounted on, to be movable with, the mounting members of the associated rams.

Each hydraulic ram may include means permitting attachment thereto of a jacking screw to permit mechanical movement of the piston thereof in the event of hydraulic failure at the ram.

By way of example only, an embodiment of the invention will now be described in greater detail with reference to the accompany drawings of which:

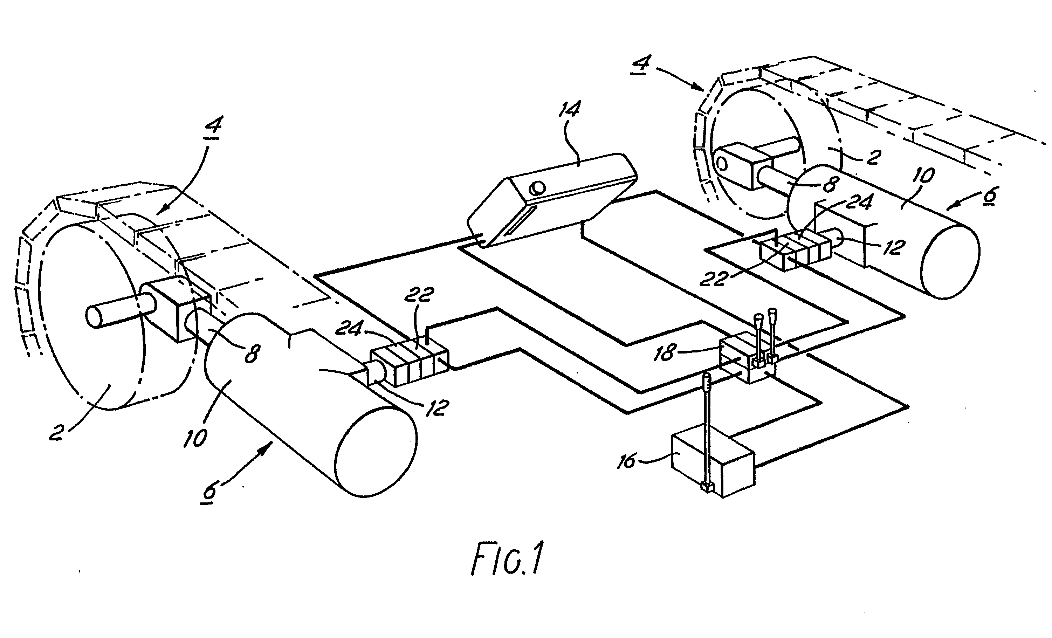

Fig. 1 is a schematic layout of tensioning means according to the invention, and

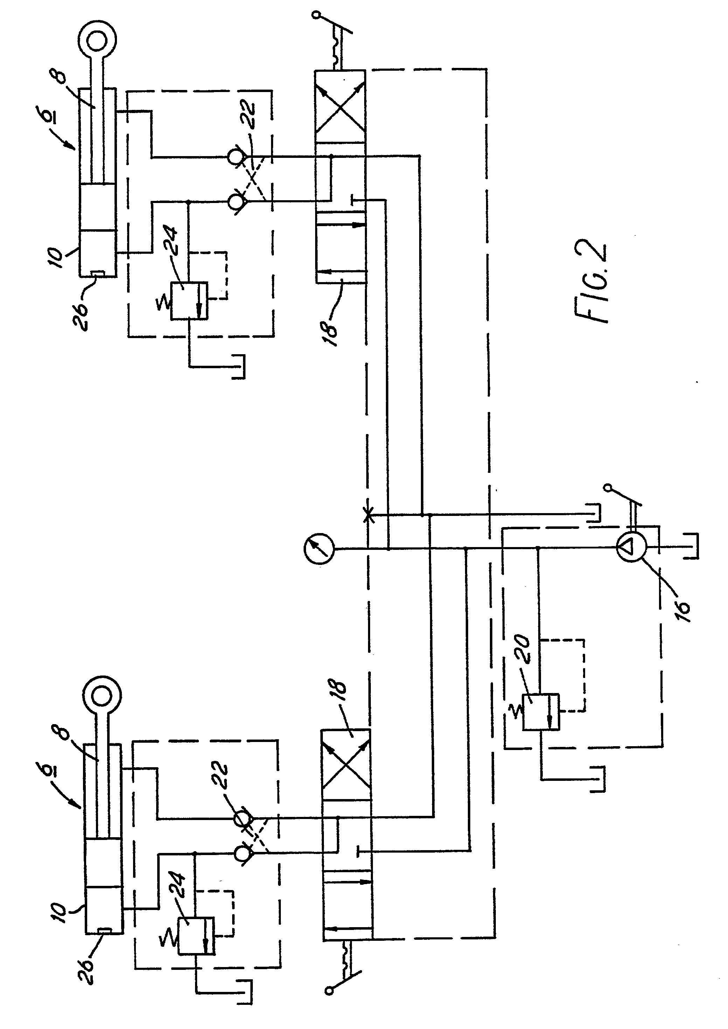

Fig. 2 is a hydraulic circuit diagram of the tensioning means of Fig. 1.

Referring to the drawings, the tracked vehicle includes a pair of idler wheels 2, one associated with each track indicated schematically at 4, the positions of which wheels 2 are to be adjusted by the tensioning means of the invention.

The tensioning means include a pair of double-acting hydraulic rams 6, one for each idler wheel 2, the piston rods 8 of which are attached to, to effect linear movement of, the associated idler wheels 2. The cylinders 10 of the rams 6 are mounted on, to be movable with, associated trunnions 12 themselves mounted in, to be pivotal relative to, the sidewalls of the vehicle hull, the trunnions 12 projecting through the hull sidewalls into the interior of the vehicle.

The hydraulic control circuit for the rams 6 is located within the vehicle and includes an oil reservoir 14 and a two-speed manually-operated pump 16. A pair of directional control valves 18 permit supply of hydraulic fluid under pressure to either ram 6 on appropriate actuation of said valves 18, while an adjustable low pressure relief valve 20 within the pump 16 determines the pressure of fluid at the rams 6 and therefore the tension in the associated tracks.

The pump 16 has a first mode - low pressure high displacement - for initial extension of the rams 6, and a second mode - high pressure low displacement - for final setting of the rams 6 at the desired pressure.

A pair of pilot-operated check valves 22, one for each ram 6, are mounted within the vehicle on the ram trunnions 12 to be movable with said trunnions 12 whereby no flexible connections between said valves 22 and the rams 6 are required, the check valves protecting the rams 6 from hydraulic collapse in the event of a downstream pressure system reduction or leakage by holding the system pressure in the ram cylinders 10.

Also mounted within the vehicle on the trunnions 12, one for each ram 6, are a pair of overload relief valves 24 to protect the system from pressure spikes induced by external forces, these overload valves 24 being set to relieve pressure progressively within the rams 6 at a combination of a predetermined maximum idler wheel load plus track tension.

Again the mounting of the relief valves 24 on the trunnions 12 obviates the requirement for any flexible connection to the high pressure, ram side of these valves 24.

The hydraulic connections between the rams 6 and the valves 22,24 is conveniently fed through the centre of the mounting trunnions 12 into the vehicle compartment. Thus it will be appreciated that the high pressure part of the hydraulic circuit is in effect locked at the trunnions 12 and is movable therewith, the only flexible connections required in the circuit being located within the vehicle to take up the small oscillations of the trunnions 12 and in that part of the circuit not under pressure. Such an arrangement thus maximises reliability and safety of the hydraulic circuitry by eliminating any flexible connections under high fluid pressure.

In the unlikely event of hydraulic failure within the high pressure part of the circuit due, for example, to physical failure of the metal of the rams, failure of the seals within the rams 6 or failure of the check valves 22 or pressure relief valves 24, pressure on the piston rods of the rams 6 can be maintained mechanically by providing threaded jacking screw holes 26 in the rear ends of the rams 6 whereby mechanical jacks can be screwed into the cylinders 10 of the rams 6 to abut the pistons of the rams 6 and to maintain them in their operative positions within the cylinders 10.

The rams 6 are double-acting whereby constant lubrication is provided at the piston rods 8 and at the oil seals thus increasing the life of the rams 6. Further, any leakage of oil from the ram 6 indicates that the piston rod seal has gone and this can therefore be replaced before the main piston seal goes.

A double-acting ram has the advantage of acting as its own oil reservoir because of the constant volume of oil within the ram regardless of its operative position, and consequently there is little displacement of oil in the main reservoir 14 of the hydraulic circuit.

Further, double-acting rams enable retraction under power as well as powered extension of the piston rods 8, thus providing quick and efficient tensioning and equally quick and efficient de-tensioning to allow for adjustment of the track quickly for such activities as link renewal, routine maintenance, bridge launch and recovery and fascine laying.

The described system can thus be operated by one man from within the personel compartment of the vehicle, eliminating the disadvantages mentioned above of the known arrangements, the hydraulic circuitry including a high pressure section concentrated at and adjacent the rams and incorporating a hydraulic lock to prevent the loss of track tension and overload protection to avoid damage to the system.

## Claims

1. Track tensioning means for a tracked vehicle, the vehicle including a personnel compartment and a pair of tracks (4) each incorporating an ajustable idler wheel (2), the tensioning means comprising, for each track (4), an hydraulically-operated, double-acting ram (6) interconnected with, and adapted to effect movement of, the associated idler wheel (4), the hydraulic rams (6) being mounted on associated mounting members (12), which members (12) are themselves mounted in, to be pivotal relative to, the body of the vehicle whereby the hydraulic rams (6) are movable bodily with said mounting members (12) about axes extending substantially transversely of the vehicle, the tensioning means further comprising a hydraulic control circuit (14 to 24) for said rams (6) actuation of which is effected from within the personnel compartment of the vehicle, characterised in that the mounting members (12) each include a part within the vehicle and the hydraulic circuit (14 to 24) includes for each double-acting ram (6), a one-way check valve (22) mounted on that part of the associated mounting member (12) located within the vehicle.

2. Track tensioning means as claimed in claim 1 in which the mounting members each comprises a trunnion (12).

3. Track tensioning means as claimed in claim 1 or claim 2 in which the hydraulic circuit (14 to 24) includes a control pump (16) incorporating a low pressure relief valve (20) adjustable to determine the hydraulic pressure in the rams (6) and therefore the tension applied to the tracks (4).

4. Track tensioning means as claimed in any one of claims 1 to 3 in which the hydraulic control circuit (14 to 24) includes, for each hydraulic ram (6), a pressure relief valve (24) adapted to relieve pressure within the associated ram (6) when said pressure exceeds a predetermined maximum value.

5. Track tensioning means as claimed in claim 4 in which the pressure relief valves (24) are mounted on, to be movable with, the mounting members (12) of the associated rams (6).

6. Track tensioning means as claimed in claim 5 in which the pressure relief valves (24) are each mounted on that part of the associated mounting member (12) located within the vehicle.

7. Track tensioning means as claimed in any one of claims 1 to 6 in which each hydraulic ram (6) includes means (26) permitting attachment thereto of a jacking screw to permit mechanical movement of the piston thereof in the event of mechanical failure at the ram (6).

## Patentansprüche

1. Kettenspannvorrichtung für ein Raupenfahrzeug, welches Fahrzeug ein Personalabteil und ein Paar von Raupen (4) umfaßt, von denen jede eine einstellbare Spannrolle bzw. Leerscheibe (2) umfaßt, die Kettenspannvorrichtung umfassend für jede Raupe (4) einen hydraulisch betätigten, doppeltwirkenden Tauch- bzw. Preßkolben (6), der wechselseitig mit der zugeordneten Spannrolle bzw. Leerscheibe (4) verbunden und dazu ausgebildet ist, deren Bewegung zu bewirken, wobei die hydraulischen Preßkolben (6) auf zugeordneten Halteelementen (12) montiert sind, welche Halteelemente (12) ihrerseits im Körper bzw. Rumpf des Fahrzeugs montiert sind, um verschwenkbar in bezug auf denselben zu sein, wodurch die hydraulischen Preßkolben (6) körperlich zusammen mit den genannten Halteelementen (12) um Achsen herum bewegbar sind, die sich im wesentlichen quer zum Fahrzeug erstrecken und die Kettenspannvorrichtung weiters einen hydraulischen Steuerkreis (14 bis 24) für die genannten Preßkolben (6) umfaßt, deren Betätigung von innerhalb des Personalabteils des Fahrzeugs aus erfolgt, dadurch gekennzeichnet, daß die Halteelemente (12) jeweils einen Abschnitt innerhalb des Fahrzeugs umfassen und der Hydraulikkreis (14 bis 24) für jeden doppeltwirkenden Preßkolben (6) ein Einweg-Rückschlagventil (22) aufweist, das auf jenem Abschnitt des zugeordneten Halteelementes (12) montiert ist, der innerhalb des Fahrzeugs gelegen ist.

2. Kettenspannvorrichtung nach Anspruch 1, bei der jedes der Halteelemente einen Dreh- bzw. Kippzapfen (12) aufweist.

3. Kettenspannvorrichtung nach Anspruch 1 oder 2, in der der Hydraulikkreis (14 bis 24) eine Steuerpumpe (16) aufweist, die mit einem Niederdruck-Sicherheitsventil (20) versehen ist, das einstellbar ist, um den Hydraulikdruck in den Preßkolben (6) und daher die auf die Raupen (4) angelegte Spannung zu bestimmen.

4. Kettenspannvorrichtung nach einem der Ansprüche 1 bis 3, in der der hydraulische Steuerkreis (14 bis 24) für jeden hydraulischen Preßkolben (6) ein Druckbegrenzungsventil (24) aufweist, das dazu ausgebildet ist, den Druck innerhalb des zugeordneten Preßkolbens (6) zu entlasten, wenn der genannte Druck einen vorgegebenen maximalen Wert übersteigt.

5. Kettenspannvorrichtung nach Anspruch 4, in der die Druckbegrenzungsventile (24) auf den Halteelementen (12) der zugeordneten Preßkolben (6) montiert sind, um mit diesen Halteelementen (12) bewegbar zu sein.

6. Kettenspannvorrichtung nach Anspruch 5, in der die Druckbegrenzungsventile (24) jeweils auf jenem Abschnitt des zugeordneten Halteelementes (12) montiert sind, der innerhalb des Fahrzeugs gelegen ist.

7. Kettenspannvorrichtung nach einem der Ansprüche 1 bis 6, in der jeder hydraulische Preßkolben (6) eine Einrichtung (26) aufweist, die die Befestigung einer Hebe- bzw. Aufbockschraube daran zuläßt, um die mechanische Bewegung des Kolbens desselben im Falle des mechanischen Versagens des Preßkolbens (6) zu ermöglichen.

## Revendications

1. Moyen de mise en tension des chenilles d'un véhicule à chenilles, le véhicule comprenant une cabine de personnel et une paire de chenilles (4) comprenant chacune une roue folle réglable (2), le moyen de mise en tension comprenant, pour chaque chenille (4), un vérin (6) à double effet et à commande hydraulique interconnecté à la roue folle correspondante (4) et disposé pour provoquer le déplacement de celle-ci, les vérins hydrauliques (6) étant montés sur des éléments de montage correspondants (12), lesdits éléments (12) étant montés eux-mêmes avec possibilité de rotation relative sur la carrosserie du véhicule, tandis que les vérins hydrauliques (6) peuvent se déplacer d'une pièce avec lesdits éléments de montage (12) autour d'axes disposés de manière essentiellement transversale par rapport au véhicule, les moyens de mise sous tension comprenant en outre un circuit de commande hydraulique (14 à 24) pour commander lesdits vérins (6) depuis la cabine du personnel du véhicule, caractérisé en ce que les éléments de montage (12) comprennent chacun une pièce dans le véhicule et que le circuit hydraulique (14 à 24) comprend, pour chaque vérin à double effet (6), un clapet anti-retour (22) monté sur la partie de l'élément de montage correspondant (12) située dans le véhicule.

2. Moyen de mise en tension de chenilles selon la revendication 1, dans lequel les éléments de montage comprennent chacun un tourillon (12).

3. Moyen de mise en tension de chenilles selon la revendication 1 ou 2, dans lequel le circuit hydraulique (14 à 24) comprend une pompe de commande (16) équipée d'une soupape de sûreté à basse pression (20) réglable pour déterminer la pression hydraulique dans les vérins (6) et donc la tension appliquée aux chenilles (4).

4. Moyen de mise en tension de chenilles selon l'une des revendications 1 à 3, dans lequel le circuit de commande hydraulique (14 à 24) comprend, pour chaque vérin hydraulique (6), une soupape (24) pour éliminer la pression disposée pour éliminer la pression dans le vérin correspondant (6) lorsque ladite pression dépasse une valeur maximale prédéterminée.

5. Moyen de mise en tension de chenilles selon la revendication 4, dans lequel les vannes d'élimination de pression (24) sont montées sur les éléments de montage (12) des vérins correspondants (6) et peuvent se déplacer avec ceux-ci.

6. Moyen de mise en tension de chenilles selon la revendication 5, dans lequel les soupapes d'élimination de pression (24) sont montées chacune sur la partie de l'élément de montage correspondant (12) situé dans le véhicule.

7. Moyen de mise en tension selon l'une des revendications 1 à 6, dans lequel chaque vérin hydraulique (6) comprend un moyen (26) auquel peut être fixée une vis de poussée pour permettre le déplacement mécanique du piston de ce vérin (6) en cas de défaillance mécanique de celui-ci.

FIG.1

FIG.2